Europäisches Patentamt

European Patent Office

Office européen des brevets

(11) Publication number: **0 162 552**
A1

## EUROPEAN PATENT APPLICATION

(21) Application number: **85302207.7**

(22) Date of filing: **29.03.85**

(51) Int. Cl.⁴: **B 62 D 21/14**
**B 62 D 53/06**

(30) Priority: **13.04.84 FI 841503**

(43) Date of publication of application:
**27.11.85 Bulletin 85/48**

(84) Designated Contracting States:
**AT BE CH DE FR GB IT LI LU NL SE**

(71) Applicant: **OY ELECTROLUX AB**
**Teollisuuskatu 1 B**
**SF-00550 Helsinki(FI)**

(72) Inventor: **Koskinen, Matti**
**Lahdensuuntie 8**
**SF-37800 Toijala(FI)**

(74) Representative: **Barlow, Roy James et al,**
**J.A.KEMP & CO. 14, South Square Gray's Inn**
**London WC1R 5EU(GB)**

(54) Telescoping semi-trailer.

(57) The plunger (10) comprises a base portion (50) adapted to be mounted on a piston rod (16) and a tip portion (60) which has a glass-engaging surface (62) and a projection (64) which enters a recess (52) in the base portion. A generally cylindrical passage (70) is defined by the base portion and the projection of the tip portion, the portion of the wall of the passage defined by the base portion being screw-threaded. A screw-threaded member (72) is threadedly received in the passage and serves to retain the tip portion on the base portion by engaging a lip (76) of the projection which projects across a portion of the passage.

Fig. 2

EP 0 162 552 A1

A loading and transfer apparatus capable of being attached to a hauling vehicle

The present invention relates to a loading and transfer apparatus capable of being attached to a hauling vehicle, comprising a frame part which carries the load, having at one end a connecting member engaging in the hauling vehicle and at the other end wheels, the frame part being able to be raised and lowered by means of a device acting on the connecting member and another device acting on the frame part, preferably hydraulic devices.

The loading and transfer apparatus is primarily intended for transferring loads used in sea transportation, for example containers, and the cassettes supporting them, into the hold of a ship at the port of departure, for unloading them at the port of destination, and for transferring them to storage areas, to land vehicles, and in general within the harbor area.

The function of the loading and transfer apparatus is to drive its frame part under a cassette standing on the ground, between its legs, and by means of its frame part to raise the cassette off the ground, and thereafter to transfer the cassette and its load into the hold of a ship, for example. The cargo to be transported is transferred on the cassette from the port of loading to the port of destination, where another loading and transfer apparatus drives into the hold, drives under the cassette, raises it off the ground, and transfers it to the harbor, to the desired site.

Apparatuses of this type are known previously, for example from Finnish Patent 59 563. The publication discloses a loading and transfer apparatus which has at one end a connecting member engaging in a hauling vehicle and at the other end positively driven wheels, the loading and transfer apparatus being made up of two frame parts articulated to each other. Owing to the two articulated parts and the positively driven wheel pairs it is possible to steer the loading and transfer apparatus to the site in question by using less space in front of the site. This is a significant achievement, since the space which is available for a loading and transfer apparatus is limited when the apparatus is loading carbo containers into ships or unloading them and when it is moving in the harbor area.

The purpose of the present invention is to develop a loading and transfer apparatus of this type further so that the operating space it requires is smaller and its maneuverability is better.

This has been achieved by means of a loading and transfer apparatus according to the invention, which is mainly characterized by the characteristics disclosed in Claim 1.

The problem in question has thus been solved in such a manner that a loading and transfer apparatus which is provided with a connecting member at one end and with wheels at the other end is made telescopic so that its load-carrying length can be reduced advantageously to half this length.

In a preferred embodiment of the invention the telescopic parts are hydraulically controlled, and so the desired length adjustment can be carried out from the hauling vehicle during driving, or before driving, or after driving.

The wheel axle of the loading and transfer apparatus is preferably made up of a bogie with its wheels, and the bogie, or respectively the wheel axle, is advantageously connected to a lifting and turning mechanism, whereby the controllability of the apparatus is improved and the operating space required by it is further reduced.

By means of the loading and transfer apparatus according to the invention it is thus possible to drive the apparatus, reduced to about half its length, and while steering the bogie, to the container flat-bed or cassette. While the shortened apparatus is being driven under the cassette, the telescopic parts are telescoped, i.e. the apparatus is extended to full length, whereupon the cassette fits on top of the apparatus. Respectively, when the cassette has been transferred to the desired site, for example into the hold of a ship, the frame of the loading and transfer apparatus is shortened when the cassette has been lowered and the apparatus is driven away. Thus the loading and transfer apparatus is again shortened to about half its length, and it is easier to control and capable of being driven away in smaller space.

In a special case it is possible also to use a half-length cassette, in which case the loading and transfer apparatus is in its shortened form throughout the time it operates with a shorter cassette. This may be the case, for example, when the last cassettes fitting into the hold of a ship are being loaded. In this case the same loading and transfer apparatus, shortened to the length required by the cassette, can be used for transferring also the shorter cassette.

A preferred embodiment of the loading and transfer apparatus according to the invention is described below with reference to the accompanying figures, in which

Figure 1 depicts a loading and transfer apparatus according to the invention, attached to a hauling vehicle and in a

4

slightly shortened state,

Figure 2 depicts the same as Figure 1, a plan wiew, and
Figure 3 depicts a cassette carrying a container, being
loaded onto a loading and transfer apparatus in order to
be transferred.

In the figures, reference numeral 1 indicates the loading
and transfer apparatus, 2 the hauling vehicle, 3 the
connecting member by means of which the apparatus is
connected to the hauling vehicle, and 4 the lifting device
by means of which the connecting member is lifted to the
transport position of the loading and transfer apparatus.
Numeral 5 indicates the bogie, and 6 the fixed frame part
of the loading and transfer apparatus, and numerals 6a and
6b indicate the telescopic parts which slide inside the part
6. The lifting and turning mechanism which is connected to
the bogie 5 and acts on the frame part 6 is not shown in
the figures. Numeral 7 indicates the forward part of the
frame, to which the turning bogie 5 is connected. Numeral
8 indicates a flat-bed fitted to the fixed frame part 6 and
carrying the load, and numeral 9 indicates a flat-bed
fitted to the forward end of the frame. The forward edge
of the flat-bed of the forward end has been given the shape
of a truncated cone to fit the inlet opening of the cassette
to be slid on top of it. The cassette is indicated by 10 and
the containers by 11.

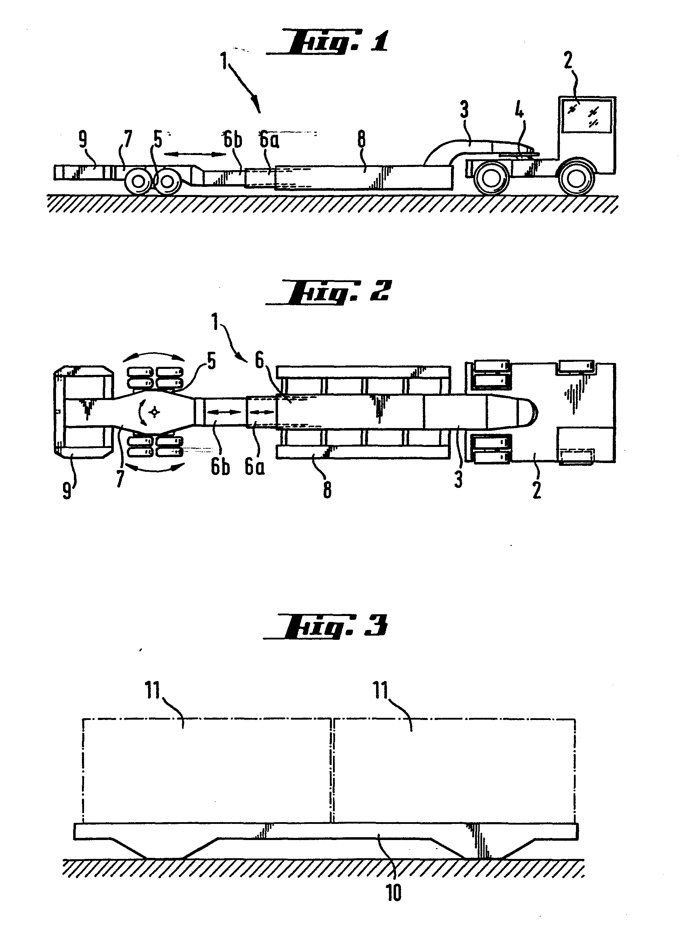

In Figures 1 and 2 the telescopic parts 6a and 6b are pushed
slightly inside the part 6. When the apparatus is being
driven under the cassette 10, it is simultaneously extended
in order that the cassette 10 fit on top of the flat-beds
8 and 9, between the coneecting member 3 and the forward end
of the forward part. The telescopic control of the parts 6,
6a and 6b is by means of conventional hydraulics, the same
as is the control of the  hauling vehicle lifting device and the lifting device connected to the bogie and acting on the frame part 7. The control system used in the hauling vehicle and acting on the lifting mechanism and the turning mechanism is also of a conventional structure and does not require more detailed dsecription in this context.

Some of the greatest advantages of the loading and transfer apparatus according to the invention are its controllability and its smaller operating space requirement. Since the apparatus can be shortened to about half its length as soon as it is free of a cassette, tnis means that the operating space it requires is considerably reduced and its controllability is better. The driver has better control within the required driving area, and safety at work is increased. The shorterning and lengthening of the apparatus is simply by a signal from the control device, and it can take place at the earliest possible moment or at the earliest moment it is necessary, i.e. during the drive from under the cassette after the parking of the cassette and, correspondingly, during the drive under the cassette in order to move the cassette.

Owing to the steerable bogie the wheels of the loading and transfer apparatus are spared from unnecessary wear, since the wheels follow the selected driving course without sliding. This sparing of the tyres is a considerable economic advantage.

It is evident that the structure of the loading and transfer apparatus according to the invention can be varied in a plurality of ways without deviating from the inventional idea and from the protected form presented in Claim 1. For example, there may be a greater number of telescopic parts if the strength requirements allow it. The hauling system and the connecting member engaging in the hauling vehicle

can vary according to different needs. The raisable and turnable bogie may have 1, 2 or more axles, depending on the bearing capacity requirements.

## Claims

1.  A loading and transfer apparatus (1) capable of being connected to a hauling vehicle  comprising a frame part (6) which carries the load to be transferred, the frame part having at one end a connecting member (3) engaging  the hauling vehicle and at the other end wheels (5), the frame part being able to be raised and lowered by means of a device acting on the connecting member and another device acting on the frame part, preferably hydraulic devices, c h a r a c t e r i z e d  i n  that the frame is made up of a fixed part (6) provided with a connecting member (3) and of one or more telescopic parts (6a, 6b) capable of being slid into it, and of a forward part connected to the outermost telescopic part and provided with a wheel axle (5).

2.  A loading and transfer apparatus according to Claim 1, c h a r a c t e r i z e d  i n  that the telescopic parts (6a, 6b) are hydraulically controlled.

3.  A loading and transfer apparatus according to Claim 1 or 2, c h a r a c t e r i z e d  i n  that the wheel axle consists of a bogie frame (5) which is connected to a controllable lifting and turning mechanism.

4.  A loading and transfer apparatus according to any of the above claims, c h a r a c t e r i z e d  i n  that on the fixed part (6) of the frame and on its outermost part (7) there are flat-beds (8, 9) which carry the load.

0162552

**Fig. 1**

**Fig. 2**

**Fig. 3**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | WO-A-8 101.987 (LE BOEUF)<br>* Page 5, lines 7-23; figures 1-5 * | 1-4 | B 62 D 21/14<br>B 62 D 53/06 |
| Y | US-A-3 913 933 (VISSER)<br>* Column 2, lines 7-37; figures 1,4 * | 1,4 | |
| Y | GB-A- 927 843 (PRIMROSE THIRD AXLE)<br>* Page 2, lines 65-74 * | 2 | |
| A | | 1 | |
| Y | DE-U-1 988 891 (DEUTSCHE FRUEHAUF)<br>* Page 7, line 3 - page 9, line 9 * | 3 | TECHNICAL FIELDS SEARCHED (Int. Cl.4) |
| A | | 1,4 | B 62 D 21/00<br>B 62 D 53/00 |
| A | US-A-4 229 019 (KOHLEY)<br>* Column 2, line 30 - column 3, line 8; figures 1,2 * | 1,4 | |
| P,A | FR-A-2 543 080 (COLAS DES FRANCS)<br>* Page 3 * | 1,3 | |
|  | --- -/- | | |

The present search report has been drawn up for all claims

| Place of search | Date of completion of the search | Examiner |
|---|---|---|
| BERLIN | 19-07-1985 | STANDRING M A |

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 033 625 (FIKSE) <br> * Column 1, line 67 - column 2, line 8 * | 1,2 | |
| A | FR-A-1 561 208 (C.I.M.T. LORRAINE) <br> * Figures 1-3; page 2, lines 5-17 * | 1,4 | |
| D,A | FR-B- 59 563 (AB NÄRPES TRÄ & METALL) <br> * Figures 1-6 * | 3,4 | |
| A | US-A-4 101 144 (ROSS et al.) <br> * Column 5, lines 27-57 * | 1,3,4 | |
| A | GB-A- 957 939 (CHARLES PITT (BARTON STACEY)) | | |

TECHNICAL FIELDS
SEARCHED (Int. Cl.4)

The present search report has been drawn up for all claims

| Place of search | Date of completion of the search | Examiner |
|---|---|---|
| BERLIN | 19-07-1985 | STANDRING M A |